# EUROPEAN PATENT APPLICATION

(11) **EP 3 026 603 A1**
(43) Date of publication of application: **01.06.2016**
(21) Application number: 15191122.9
(22) Date of filing: 22.10.2015
(51) Int. Cl.: G06Q 10/00, G06Q 10/06

(54) **TASK SUPPORT TERMINAL APPARATUS, TASK SUPPORT METHOD, PROGRAM, AND RECORDING MEDIUM**

(30) Priority: 28.11.2014 JP 2014241221
(71) Applicant: Yokogawa Electric Corporation, Tokyo 180-8750 (JP)
(72) Inventor: Tokuoka, Moe, Tokyo, 180-8750 (JP); Furihata, Ryouhei, Tokyo, 180-8750 (JP)
(74) Representative: Henkel, Breuer & Partner

(57) **Abstract**

A task support terminal apparatus which supports a task carried out on a facility of a plant is provided. The task support terminal apparatus includes a position information acquirer which is configured to acquire a first position information at a time interval set in advance and a second position information on a position at which results of the task are acquired; a task content processor which is configured to generate a task information in which results of the task carried out on the facility are collated to the second position information acquired by the position information acquirer; and a map preparation device which is configured to prepare a map in which the first position information acquired in the position information acquirer is shown with a first symbol and the second position information collated with the task information is shown with one or a plurality of second symbols which are different from the first symbol.

## Description

### BACKGROUND OF THE INVENTION

### Field of the Invention

Priority is claimed on Japanese Patent Application No. 2014-241221, filed November 28, 2014, the content of which is incorporated herein by reference.

Embodiments of the present invention relate to task support terminal apparatuses, task support methods, programs, and recording media for supporting tasks within a plant.

### Related Art

In a plant having various facilities, routine inspection tasks and tasks handling troubles such as malfunctions, failures, etc., are carried out on each of the facilities provided at a specific position within the plant. For example, a worker who carries out such a task visits a facility to be a work site by methods such as being told the position from a different worker, viewing a map, accompanying a worker with experience in many of the tasks, etc. However, there are possibly various problems depending on the different methods by which the worker visits the work site.

For example, there are possibly problems such that time of the worker with experience in a guiding task ends up being restricted when the worker accompanies the worker with experience in many of the tasks to visit the work site. Moreover, there are possibly problems such that, when the worker himself visits the work site by being told the position from the different worker or relying on the map, the worker ends up heading toward a wrong facility or arriving late at a facility of the work site if he gets confused with the current position or the position of the work site on his way to the work site, for example. Furthermore, there is also a problem that a correct map needs to be prepared in advance when the worker visits the work site by relying on the map.

On the other hand, when the worker arrives at the work site to carry out the tasks handling troubles of the facility, a task may be needed for checking a list of the facilities to carry out an investigation of the other facilities related to the facility and time may also be needed from starting investigation of the cause of the trouble to recovery of the facility. Moreover, a root cause of the troubles may not be known.

Now, a technique is being proposed on an equipment management apparatus as shown in Japanese Patent Application Publication No. H11-039030, for example. In the technique disclosed in Japanese Patent Application Publication No. H11-039030, a sketch of facilities may be displayed to visually present the positional and connection relationships of the respective facilities to a worker. Moreover, in the technique disclosed in Japanese Patent Application Publication No. H11-039030, a detailed information for each of the respective facilities may be presented to the worker.

However, in the technique disclosed in Japanese Patent Application Publication No. H11-039030, the sketch (a piping diagram) is prepared in advance and the respective facilities are superimposed on this sketch to be displayed thereon to thereby present the displayed result to the worker. Then, positions at which the respective facilities are superimposed on the sketch to display the superimposed result on the sketch are actually provided, or, in other words, information on the distance (interval) between the respective facilities is not reflected. Therefore, there is a problem, with the technique disclosed in Patent document 1, that the subject facility at which the task is to be actually carried out could be misidentified. Moreover, the task of preparing the sketch in advance is very complicated, so that there may also be an error in the prepared sketch.

### SUMMARY OF THE INVENTION

In an aspect of embodiments of the present invention, a task support terminal apparatus which supports a task carried out on a facility of a plant is provided, including: a position information acquirer which is configured to acquire a first position information at a time interval set in advance and a second position information on a position at which results of the task are acquired; a task content processor which is configured to generate a task information in which results of the task carried out on the facility are collated to the second position information acquired by the position information acquirer; and a map preparation device which is configured to prepare a map in which the first position information acquired in the position information acquirer is shown with a first symbol and the second position information collated with the task information is shown with one or a plurality of second symbols which are different from the first symbol.

Moreover, the map preparation device in the task support terminal apparatus according to one embodiment of the present invention applies a decoration which visually shows a connection of the second symbols shown in the map prepared based on a facility-related list in which information on the connection of the facilities that is input is collated for the respective facilities.

Furthermore, the map preparation device in the task support terminal apparatus according to one embodiment of the present invention applies a decoration which visually shows the condition within the plant shown in the map prepared in accordance with an operation input.

Moreover, the map preparation device in the task support terminal apparatus according to one embodiment of the present invention applies a decoration which visually shows the input information content in the position within the map specified by an operation input.

Furthermore, the map preparation device in the task support terminal apparatus according to one embodiment of the present invention does not change the second position information corresponding to the second symbol and changes only the coordinate information on the map when indicating the second symbol when moving the second symbol indicated in the map prepared in accordance with an operation input.

Moreover, in response to an operation input, the task content processor in the task support terminal apparatus according to one embodiment of the present invention causes the content of the task carried out on the facility that is stored in advance to be displayed and generates the task information in which are collated the content of the task, the results of the task, and the second position information.

Furthermore, the task content processor in the task support terminal apparatus according to one embodiment of the present invention generates a task information in which the results of the task are added to results of the task that are already included in the task information.

Moreover, a task support method in a task support terminal apparatus which supports a task carried out on a facility of a plant is provided according to one embodiment of the present invention. The task support method includes the steps of: acquiring a first position information at a time interval set in advance and a second position information at a position at which results of the task is acquired; generating a task information in which results of the task carried out on the facility are collated to the second position information acquired in the acquiring; and preparing a map in which the first position information acquired in the acquiring is shown with a first symbol and the second position information collated with the task information is shown with one or a plurality of second symbols which are different from the first symbol.

Furthermore, a non-transitory computer readable medium having recorded thereon a program which causes a computer to execute a task support method in a task support terminal apparatus which supports a task carried out on a facility of a plant is provided according to one embodiment of the present invention. The task support method includes the steps of: acquiring a first position information at a time interval set in advance and a second position information at a position at which results of the task is acquired; generating a task information in which results of the task carried out on the facility are collated to the second position information acquired in the acquiring; and preparing a map in which the first position information acquired in the acquiring is shown with a first symbol and the second position information collated with the task information is shown with one or a plurality of second symbols which are different from the first symbol.

### BRIEF DESCRIPTION OF THE DRAWINGS

FIG. 1 is a block diagram illustrating an overview configuration of a task support terminal apparatus according to an embodiment of the present invention;
FIG. 2A is a diagram illustrating one example of conditions of a plant for which a map is prepared in the task support terminal apparatus according to the present embodiment;
FIG. 2B is a diagram illustrating one example of a map prepared in the task support terminal apparatus according to the present embodiment;
FIG. 3 is a diagram illustrating one example in which the prepared map is displayed in the task support terminal apparatus according to the present embodiment;
FIG. 4A is a diagram illustrating one example in which the prepared map is decorated in the task support terminal apparatus according to the present embodiment;
FIG. 4B is a diagram illustrating one example in which the prepared map is decorated in the task support terminal apparatus according to the present embodiment;
FIG. 5 is a diagram illustrating another one example in which the prepared map is decorated in the task support terminal apparatus according to the present embodiment;
FIG. 6 is a diagram illustrating a further one example in which the prepared map is decorated in the task support terminal apparatus according to the present embodiment;
FIG. 7 is a diagram illustrating one example of displaying information for supporting a task on the prepared map in the task support terminal apparatus according to the present embodiment;
FIG. 8 is a diagram illustrating one example of displaying search results on the prepared map in the task support terminal apparatus according to the present embodiment;
FIG. 9 is a diagram illustrating one example of displaying a task information in the task support terminal apparatus according to the present embodiment; and
FIG. 10 is a diagram illustrating one example in which decoration is applied onto the prepared map in the task support terminal apparatus according to the present embodiment.

### DETAILED DESCRIPTION

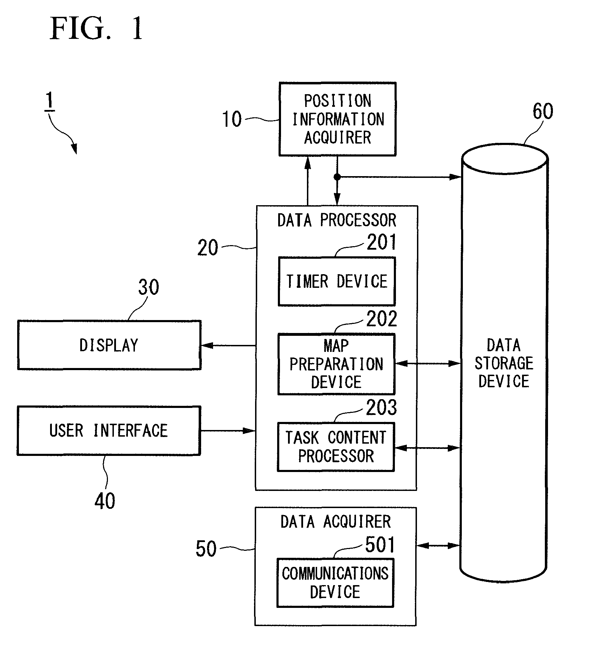

Below some embodiments of the present invention are explained with reference to the drawings. FIG. 1 is a block diagram illustrating an overview configuration of a task support terminal apparatus according to the present embodiment. A task support terminal apparatus 1 includes a position information acquirer 10, a data processor 20, a display 30, a user interface 40, a data acquirer 50, and a data storage device 60.

The task support terminal apparatus I is a portable terminal apparatus which is carried by a worker who is a user of the task support terminal apparatus 1. The worker carries out inspection tasks and tasks handling troubles at a facility provided within a plant. The plant includes an industrial plant such as a chemical plant, etc., a plant which manages and controls a well site such as a gas field, an oil field, etc., and the periphery thereof, a plant which manages and controls generation of such as hydraulic power, thermal power, nuclear power, etc., a plant which manages and controls generation of environmental power with solar light, wind force, etc., a plant which manages and controls water supply and drainage, dam, etc.

The task support terminal apparatus 1 prepares a map by acquiring information on the current position of the worker who carries the task support terminal apparatus 1. Moreover, the task support terminal apparatus 1 presents the content of the task in the facility shown in the prepared map to the worker. Each of constituting elements of the task support terminal apparatus 1 is arranged within electronic device such as a so-called tablet terminal that includes functions of a personal computer and a PDA (personal digital assistant) that are used by the worker, for example.

In response to a request from the data processor 20, the position information acquirer 10, for example, receives a GPS signal from a GPS (Global Positioning System) satellite and acquires a position information showing the position of the task support terminal apparatus 1 (that is referred to below as the "position information"). The position information acquirer 10 outputs the acquired information to the data processor 20 and causes the output result to be stored in the data storage device 60.

The data processor 20 controls the respective constituting elements included in the task support terminal apparatus 1 to thereby control the whole of the task support terminal apparatus 1. Moreover, the data processor 20 carries out a process for realizing functions in the task support terminal apparatus 1, such as preparing the map, presenting the task content, etc. More specifically, based on the position information acquired by the position information acquirer 10, the data processor 20 prepares the map within the plant which uses the task support terminal apparatus 1. Moreover, the data processor 20 processes the content of the task on the respective facilities provided in the plant and the result thereof in association with the information on the position that is acquired by the position information acquirer 10. Then, the data processor 20 generates a display screen in accordance with functions of the task support terminal apparatus 1 that are processed, and outputs the generated display screen onto the display 30 to be displayed thereon. The data processor 20 includes a timer device 201, a map preparation device 202, and a task content processor 203.

For each time interval set, the timer device 201 requests acquisition of the position information to the position information acquirer 10. Setting of the time interval onto the timer device 201 is carried out by the user interface 40.

Based on the position information acquired by the position information acquirer 10, the map preparation device 202 prepares a map which shows a route along which the worker moves while he carries the task support terminal apparatus 1. Then, the map preparation device 202 causes data on the prepared map to be stored in the data storage device 60. Moreover, the map preparation device 202 generates a display screen for displaying the prepared map onto the display 30 to output the prepared result to the display 30. Detailed explanations on a method of preparing the map by the map preparation device 202 will be described below.

In the facility which exists on the map prepared by the map preparation device 202, the task content processor 203 generates a display screen for displaying the content of the task carried out by the worker onto the display 30 to output the generated display screen to the display 30. Moreover, the task content processor 203 stores information (below referred to as a "task information") which collates the content of the task which is caused to be displayed onto the display 30 and results of tasks carried out by the worker in the facility with the position information acquired by the position information acquirer 10 in the data storage device 60. In this way, the information on the position of the facility and the task information in which are compiled the content and the result of the task on this facility are stored in the data storage device 60. The content of the task may be stored in advance as a template in the data storage device 60, or may be prepared while the worker is carrying out the task. Moreover, when the worker carries out a task on the same facility, the task content processor 203 generates a display screen which displays the content of the task included in the task information is generated to output the generated result to the display device 30. Then, the task content processor 203 may generate a display screen for referring to the information on the result of the task included in the task information as a previous task result to output the generated result to the display 30.

The display 30, which is a display device such as a liquid crystal display (LCD), etc., for example, displays thereon an image in accordance with a display screen output from the data processor 20 to thereby present the information to the worker.

The user interface 40 accepts an operation on the task support terminal apparatus 1 by the worker. For example, the user interface 40 may be a user interface such as a button, switches, etc. The user interface 40 outputs information in accordance with the accepted operation of the worker to the data processor 20. The user interface 40 is not limited to a configuration by means of the button, the switches, so that it may be configured with a press sensor provided within the display 30, for example. In other words, the user interface 40 may be arranged as a touch panel which is combined with the display 30. In this case, the user interface 40 detects various touch operations (tap, flick, etc.) by the operator and accepts the detected operations as operations onto the work support terminal apparatus 1 by the operator.

The data acquirer 50 acquires various data sets for use in a process in the task support terminal apparatus 1 from various facilities within a plant which uses the task support terminal apparatus 1. The data acquirer 50 includes a communications device 501.

The communications device 501 conducts communications with the various facilities in the plant which uses the task support terminal apparatus 1. For example, the communications device 501 conducts communications with a server apparatus in which is stored a facility-related list in which information on connecting together the facilities provided in the plant is compiled for each of the facilities. Moreover, the communications device 501 conducts communications with an actuator, etc., which operate measuring instruments which are provided at the respective facilities for measuring the state of the facilities and an actuator, etc., which operates the facilities. Moreover, when multiple of the task support terminal apparatuses 1 are used in the plant, the communications device 501 conducts communications with a different one of the task support terminal apparatuses 1. It is noted that a method of communicating between the communications device 501 and a server apparatus, a measuring instrument, or a different task support terminal apparatus I is not to be specifically specified, regardless of wired or wireless.

The data acquirer 50 causes data acquired by the communications device 501 communicating with the respective facilities, for example, the facility-related list, results of measurement by the measurement instrument, data shared with the different one of the task support terminal apparatuses 1, etc., to be stored in the data storage device 60.

The data storage device 60 is a storage device which stores data used in various processes in the task support terminal apparatus 1. For example, the data storage device 60 stores data on the task information, the map prepared by the data processor 20, and the position information acquired by the position information acquirer 10. Moreover, the data storage device 60 stores the facility-related list, results of measurement by the measurement instrument, data shared with the different one of the task support terminal apparatuses 1, etc., that are acquired by the data acquirer 50 communicating with the communications device 501.

With such a configuration, the task support terminal apparatus 1 performs support on tasks, such as preparation of the map within the plant, presentation of the task content in the facility, storage of task results, etc.

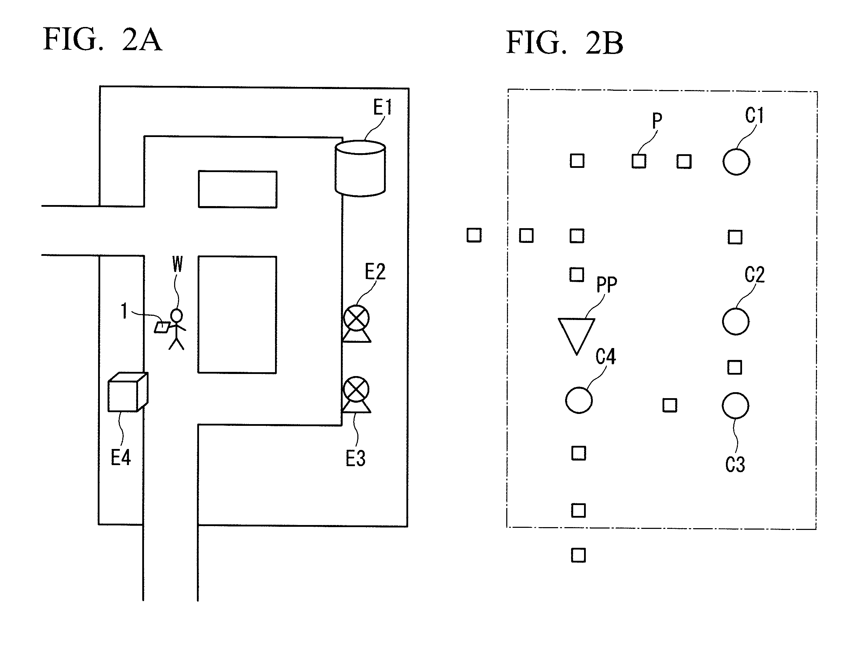

Next, an operation of the task support terminal apparatus 1 according to the present embodiment is described. FIGS. 2A and 2B are diagrams illustrating one example of conditions of the plant for which the map is prepared and one example of the map prepared in the task support terminal apparatus 1 according to the present embodiment. FIG. 2A shows one example of an arrangement of facilities in the plant for which the map is prepared, while FIG. 2B shows one example of the map prepared by the map preparation device 202 which is provided in the task support terminal apparatus 1. In the explanation below, the task support terminal apparatus 1 is described as being a configuration which includes a touch panel in which are combined the display 30 and the user interface 40, for example, a tablet terminal which includes a relatively large touch panel.

In the plant, a facility on which a task is carried out is provided at a specific position. In FIG. 2A are shown facilities E1-E4 which are provided facing roads in the plant and how a worker W moves while carrying the task support terminal apparatus 1. Here, explanations will be given of an operation in which, using the task support terminal apparatus 1, the worker W who has experience in many tasks (the worker W who is skilled) uses the task support terminal apparatus 1 to prepare a map within a plant in accordance with procedures for carrying out tasks on the respective facilities within the plant. In the descriptions below, explanations will be provided such that the content of the work carried out in the respective facilities has already been stored in the data storage device 60 included in the task support terminal apparatus 1.

(Procedure M1): The worker W activates the task support terminal apparatus 1 and operates the user interface 40 to set the time interval (for example, a few seconds, a few tens of a second) which acquires position information by the position information acquirer 10. The user interface 40 which accepted this operation outputs the set information on the time interval to the data processor 20. Then, the data processor 20 sets the information on the time interval that is input from the user interface 40 and starts acquiring the position information by the position information acquirer 10. Moreover, the map preparation device 202 starts preparation of the map. When the time interval during which the position information is acquired by the worker W is not set even after a predetermined time has elapsed after the task support terminal apparatus 1 is activated, or, in other words, when information on the time interval is not output from the user interface 40, the data processor 20 sets an initial time interval value (for example, 30 seconds) in the timer device 201 to start acquisition of the position information by the position information acquirer 10.

(Procedure M2): The worker W carries the task support terminal apparatus 1 in which the time interval is set to visit the respective facilities. Then, the timer device 201 requests acquisition of the position information at the set time interval to the position information acquirer 10. Then, the position information acquirer 10 causes position information sets (first position information sets) acquired in accordance with a request from the timer device 201 to be successively stored in the data storage device 60. Moreover, based on the position information which is successively acquired by the position information acquirer 10, the map preparation device 202 prepares data on a map which indicates a symbol (a first symbol) which shows a route along which the worker W moved while the worker W carries the task support terminal apparatus 1. In FIG. 2B is shown an example of a map which indicates a passing point P indicated with a quadrangular symbol at the respective locations of the route along which the worker W moved. The symbol for the passing point P is not limited to the above-mentioned quadrangular symbol, so that the type (for example, above ground, underground, etc.) of the road in the plant for which the passing point P is set by varying the shape or the color of the symbol may be shown.

(Procedure M3): Upon arrival at the work site (for example, the facility E1), the worker W operates the user interface 40 to instruct presentation of the task content to the task support terminal apparatus 1. The user interface 40 which accepted this operation outputs information showing that the presentation of the task content was instructed to the task support terminal apparatus 1. In this way, the task content processor 203 requests acquisition of the position information of the current position to the position information acquirer 10. Then, the position information acquirer 10 outputs the position information acquired in response to a request from the task content processor 203 to the data processor 20, or, in other words, the task content processor 203. Thereafter, the task content processor 203 reads the task information in which is included the content of the task on a facility provided at the position indicated in the position information acquired from the position information acquirer 10 and generates a display screen for presenting the read task information (the task content) to the worker W to output the generated result to the display 30. In this way, the display device 30 displays (presents) thereon the task content on a facility provided at the present location that is requested by an operation of the user interface 40.

For identifying the different facilities, for example, a case may be envisaged such that an identification information such as a tag, etc., is allocated to the respective facilities, and information on the tag to which the communications device 501 is allocated to the facility is acquired. In this case, the task content processor 203 may be configured such that acquisition of the position information of the current position is not requested to the position information acquirer 10, and, based on information on a tag that is acquired by the communications device 501, the task information including the task content corresponding to the facility is read from the data storage device 60 to present the task information to the worker W.

(Procedure M4): The worker W carries out a task on the facility based on the task content presented and operates the user interface 40 to input the result of the task carried out into the task support terminal apparatus 1. The user interface 40, which accepted this operation, outputs information on the input task result to the operation content processor 203. In this way, the work content processor 203 requests acquisition of the position information on the current position to the position information acquirer 10. Then, the position information acquirer 10 outputs the position information (a second position information) acquired in response to the request from the task content processor 203 to the task content processor 203. Thereafter, the task content processor 203 causes the task information in which are collated the position information acquired from the position information acquirer 10 and information on the task results that is input from the user interface 40 to be stored in the data storage device 60. Then, based on the position information collated with the task information, the map preparation device 202 prepares map data which indicate a different symbol (a second symbol) which distinguishes from itself from a passing point P for showing that the task information has been stored are prepared. The map preparation device 202 may change the symbol of the passing point P of the current position included in the map prepared in the procedure M2 to a symbol showing that the task information has been stored. In FIG. 2B, one example is indicated of a map which shows a checkpoint C (for example, a checkpoint C1 in the task in the facility E1) shown with a circle symbol in the current position in which the task information is stored. It is noted that the symbol of the checkpoint C is not to be limited to the above-described circle symbol, so that the type (for example, measurement of data, visual inspection, etc.) of the task carried out in the work site to be the checkpoint C may be indicated by varying the shape and the color of the symbol.

In the procedure M4, when the communications device 501 which is included in the task support terminal apparatus 1 conducts communications with a measuring instrument which is provided in the facility to acquire measurement results, the communications device 501 also stores the acquired measurement results in the data storage device 60 as a work information collated with the position information.

(Procedure M5): The worker W carries the task support terminal apparatus 1 to head toward the facility to be the next work site. Here, in the same manner as the procedure M2, the timer device 201 requests acquisition of the position information at a time interval set to the position information acquirer 10 and causes the position information which is successively acquired by the position information acquirer 10 to be stored in the data storage device 60 in response to the request from the timer device 201. Moreover, in the same manner as the procedure M2, the map preparation device 202 also prepares map data with the position information which is successively acquired by the position information acquirer 10 as the passing point P.

Thereafter, the worker W repeats procedures M3-M5 until the current series of tasks is completed. With a series of tasks by the worker W, based on the position information acquired by the position information acquirer 10 and the task results input by the worker W, a map showing a passing point P shown as a route for visiting a facility which is provided in the respective positions within the plant and the checkpoint C shown as a facility which performs an operation is prepared.

As described above, in the task support terminal apparatus 1, the position information acquirer 10 successively acquires the position information at a time interval set by the timer device 201. Therefore, the map preparation device 202 may successively generate a display screen for displaying a prepared map onto the display device 30. Then, the map preparation device 202 may generate a display screen which changes a symbol of a passing point P shown by the recent position information to a symbol which shows the current position of the task support terminal apparatus 1. FIG. 2B shows one example of a map shown with the symbol of the passing point P of the current position being changed to the current position point PP shown with a triangle symbol. Then, the map preparation device 202 may successively generate a display screen which shows a current position point PP based on the most recent position information to update the generated display screen to indicate how the task support terminal apparatus 1 and the worker W moves in the map to be displayed on the display 30.

(Procedure M6): When the worker W completes the current series of tasks, the worker W operates the user interface 40 to report to the operation support terminal apparatus 1 that all of the tasks have been completed. The user interface 40 which accepted this operation outputs information showing that preparation of the map is to be completed to the data processor 20. In this way, the data processor 20 completes preparation of a map by the map preparation device 202, storage into the data storage device 60 of the task information by the task content processor 203, and requesting for acquiring the position information at a time interval set by the timer device 201.

In the task support terminal apparatus 1, such procedures make it possible for the map preparation device 202 to prepare the map which accurately reflects the positional relationship of the respective facilities provided in the plant based on the position information acquired by the position information acquirer 10. Moreover, in the task support terminal apparatus 1, the task content processor 203 may store the position information acquired from the position information acquirer 10 and information on the results of tasks on the respective facilities that are carried out by the worker W. This makes it possible, even when a different worker uses the operation task terminal apparatus 1, to efficiently visit the respective work sites and to easily grasp the task at the work site to carry out the task.

In the above-described procedure to prepare the map, while a case is shown of the worker W instructing presentation of the task content in the procedure M3, for the skilled worker W, who is familiar with the task content, the presentation of the task content may not be instructed. However, in the procedure M4, when inputting of results of the task carried out into the task support terminal apparatus 1 is carried out, data on the map with the position of the facility which carried out the task as the checkpoint C may be prepared even if the worker W does not instruct presenting of the task content.

When the worker W brings back the task support terminal apparatus 1 in which preparation of the map data is completed to an office within a plant, for example, the task support terminal apparatus 1 may share data on the prepared map with the different task support terminal apparatus 1 within the office by means of communications by the communications device 501. For example, the communications device 501 may also store the prepared map data into the server apparatus by communications with the server apparatus provided in the office and share the prepared map data with the different task support terminal apparatus 1 within the office via the server apparatus.

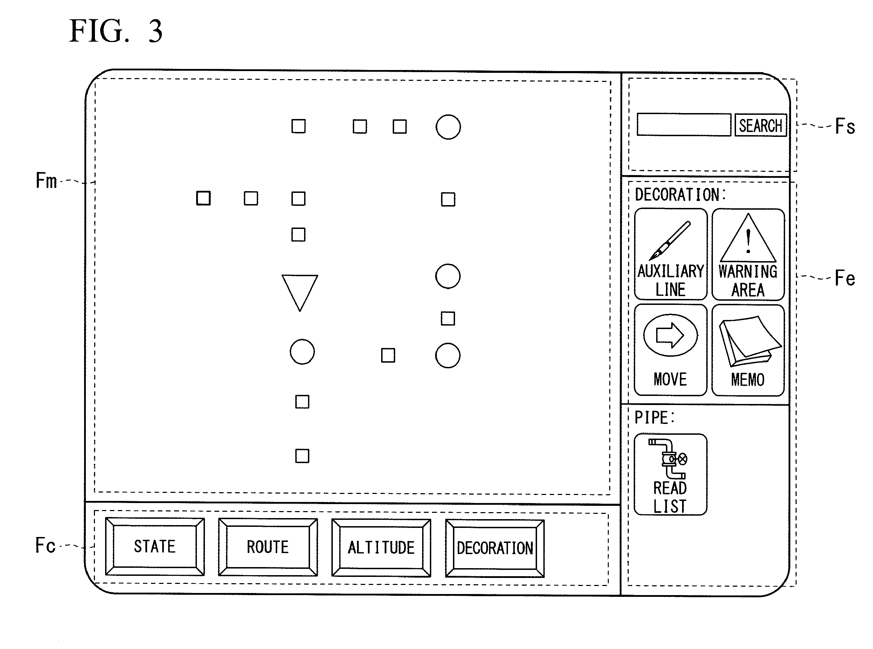

Next, a more specific example of a map to be displayed on the display 30 of the task support terminal apparatus 1 is described. FIG. 3 is a diagram illustrating one example in which the prepared map is displayed in the task support terminal apparatus 1 according to the present embodiment. FIG. 3 shows one example of a display screen (below called "map screen") which is generated by the map preparation device 202. The map screen includes a map display region Fm, a display content control region Fc, a search function region Fs, and a map editing region Fe.

The map display region Fm is a region in which is displayed a map prepared by a procedure for preparing the above-described map. FIG. 3 shows a case in which is displayed a map shown in FIG. 2B that is prepared by the map preparation device 202.

The display content control region Fc is a region in which is displayed a control button for controlling the displayed content onto the map displayed in the map display region Fm. FIG. 3 shows a case in which is displayed a "state" button for superimposing the state of a task carried out on the respective facilities onto the map displayed in the map display region Fm to display the superimposed result thereon; a "route" button for superimposing a route at the time of visiting the respective facilities to display the superimposed result thereon; and an "altitude" button for superimposing an altitude of a position of a work site at which the task is carried out in the respective facilities. Moreover, FIG. 3 shows a case in which is displayed "a decorate" button for applying a decoration on the map displayed in the map display region Fm for more visually showing a map prepared by the map preparation device 202.

The search function region Fs is a region in which a search language is input to conduct a search with the input language being set as a keyword. For example, the worker W inputs an identification information such as a tag which is allocated to a facility into the search function region Fs when the worker W arrives at the facility, and then the "search" button is tapped. This operation being accepted by the user interface 40 and outputting to the task content processor 203 causes the task content processor 203 to read a task information in which is included task content on the facility to which is allocated the identification information input into the search function region Fs from the data storage device 60 to submit the task information to the worker W.

The map editing region Fe is a region which displays various operation buttons for applying decoration onto the map displayed in the map display region Fm in response to the "decorate" button indicated in the display content control region Fc. FIG. 3 shows an "auxiliary line" button, a "warning area" button, a "move" button, a "memo" button, and a "list read" button as an example of an operation button for applying decoration to the map in response to the "decorate" button.

Here, one example is explained of an operation which applies a decoration onto the map using the respective operation buttons shown in the map editing region Fe. First, an operation is described for a case in which a decoration which visually shows the connecting relationship of the respective facilities (checkpoints C) shown in the map based on a facility-related list in which information related to connecting together the facilities provided in the plant is compiled for the respective facilities.

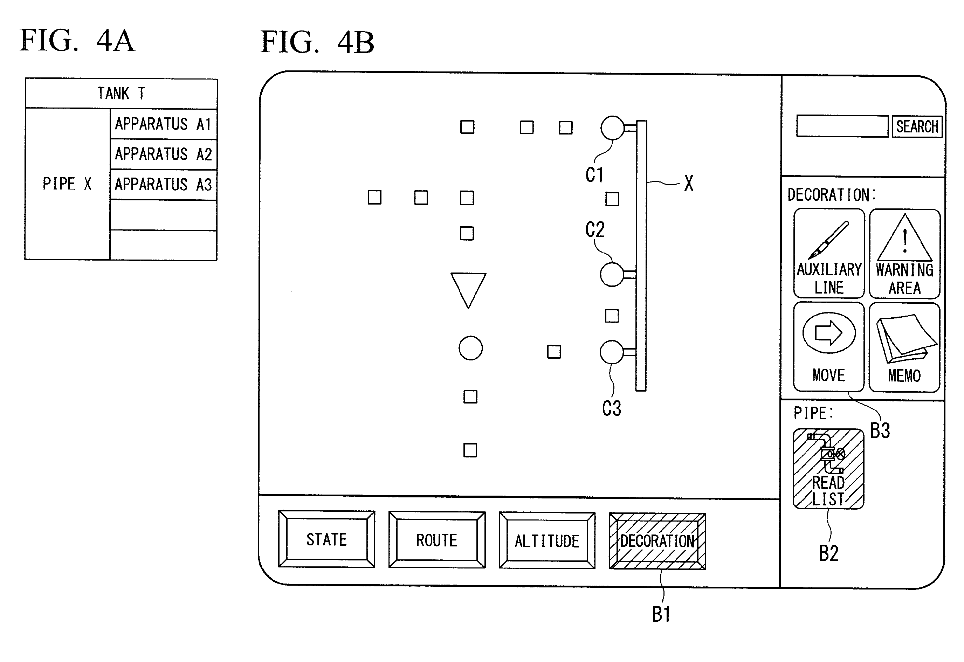

FIGS. 4A and 4B show one example in which the prepared map is decorated in the task support terminal apparatus 1 according to the present embodiment. FIG. 4A shows one example of the facility-related list, while FIG. 4B shows one example of a map in which a pipe which connects the respective facilities included in a map prepared by the map preparation device 202 is applied as a decoration.

As shown in FIG. 4A, in the facility-related list is enumerated (listed up) in advance a pipe for supplying a material to a facility (for example, a tank T) to be a supply source of the material (for example, a fluid, etc.) and the facility to which the material is supplied, or, in other words, an apparatus connected to a pipe (for example, an apparatus A1 is a valve which controls the flow rate of a fluid, while an apparatus A2 is a flow rate meter which measures the flow rate of a fluid). In the facility-related list, as information on connecting together the facilities, for example, information that the tank T is connected to a pipe X, the apparatus A1 is connected to the pipe X, and the apparatus A2 is connected to the pipe X is also included. Then, in accordance with the procedure described below, the worker W applies the decoration of the pipe to the map prepared by the map preparation device 202. As described above, the task support terminal apparatus 1 stores the facility-related list in the data storage device 60.

(Procedure D1): While the map prepared by the map preparation device 202 is displayed in the display 30 of the task support terminal apparatus 1 is being displayed, the worker W taps a "decoration" button B1 within the display content control region Fc to cause the respective operation buttons to be displayed in the map editing region Fe. Then, the worker W taps a "list read" button B2 within the map editing region Fe to instruct reading of the facility-related list. The user interface 40 which accepted this operation outputs information showing that reading of the facility-related list is instructed to the map preparation device 202. This causes the map preparation device 202 to read the facility-related list from the data storage device 60.

(Procedure D2): Then, the map preparation device 202 compares the position information on the facilities of each of a supply source and supply destination of a material included in the read facility-related list with the position information of the respective checkpoints C displayed in the map display region Fm, and collates the respective facilities of the supply source and the supply destination of the material and the respective checkpoints C. The map preparation device 202 may compare the identification information such as a tag allocated to the respective facilities included in the facility-related list and the identification information included in the task information on the respective checkpoints C to collate the facilities of each of the supply source and the supply destination and the respective checkpoints C.

(Procedure D3): Then, the map preparation device 202 generates a map screen which schematically shows a pipe which connects the respective checkpoints collated and causes the generated map screen to be output to and displayed on the display 30. In this way, as shown in FIG. 4B, a map in which are connected together the respective checkpoints C is displayed in the map display region Fm. In one example shown in FIG. 4B is shown a case in which it is collated that the checkpoint C1 (the facility E1) is the tank T which is included in the facility-related list, the respective checkpoints C2 (facility E2) and C3 (facility E3) are the apparatuses A1 and A2 included in the facility-related list, respectively, and each of the checkpoints C1 to checkpoints C3 is connected to the pipe X. In one example shown in FIG. 4B, the apparatus A3 connected to the pipe X (see FIG. 4A) is not shown within the map screen, so that it is not connected.

(Procedure D4): Moreover, the map preparation device 202 stores information which shows that the respective checkpoints C connected together are connected by decoration of the pipe X as a supplementary information for generating a map screen in the data storage device 60. In this way, even when the task support terminal apparatus 1 is used at a different opportunity, when a region including the checkpoints C1 to C3 is caused to be displayed in the display 30, a map in which is applied a decoration of the pipe X is displayed in the map display region Fm. The supplementary information includes, for example, information on the coordinates within the map display region Fm which shows the position of the respective checkpoints C and the coordinates within the map display region Fm which shows the decoration of the pipe X.

In this way, in the task support terminal apparatus 1, a decoration (a decoration of the pipe X in FIG. 4) which connects together the checkpoints C may be applied in a map prepared by the map preparation device 202 by only instructing reading of the facility-related list. The worker W may also manually adjust the decoration of the pipe X, by moving the position of the pipe X after the decoration of the pipe X is applied in the map, etc. In this case, by tapping the pipe X after the "movement" button B3 within the map editing region Fe is tapped, for example, the worker W selects, drags, and moves the pipe X. Then, the map preparation device 202 updates the supplementary information stored in the data storage device 60 to information (for example, information on the coordinate after moving the pipe X) showing the position of the pipe X adjusted manually.

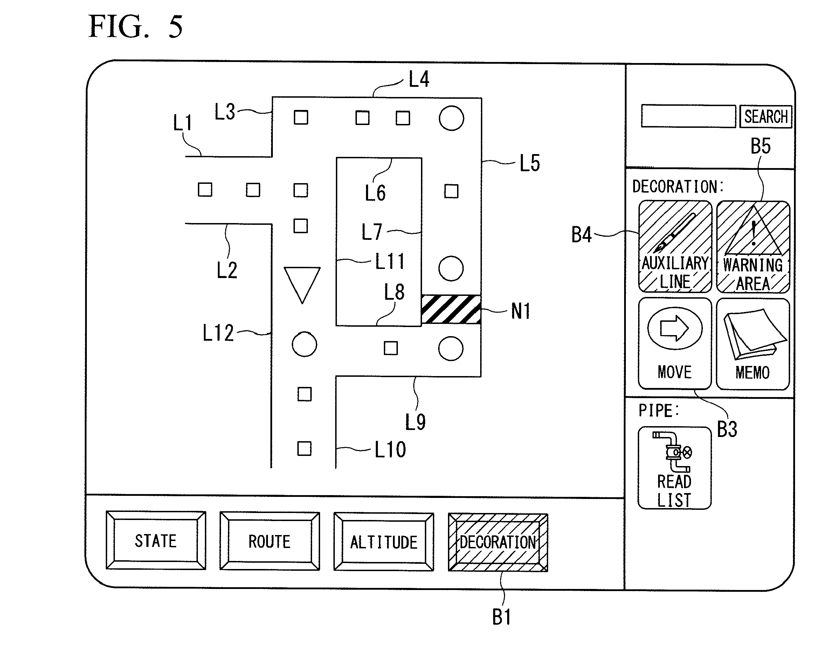

Next, explanations are given for a case in which roads and various regions are drawn within the plant to apply a decoration which visually shows the condition within the plant to the map, such as routes to the various facilities and peripheral conditions, etc., for example. FIG. 5 is a diagram illustrating another one example in which the prepared map is decorated in the task support terminal apparatus 1 according to the present embodiment. FIG. 5 shows one example of a map in which information on a road within a plant is applied as a decoration in a map prepared by the map preparation device 202. Moreover, FIG. 5 also shows information on warning location within the plant as one example. According to procedures as described below, the worker W applies decoration on the road and the warning location in the map prepared by the map preparation device 202.

(Procedure D11): While a map prepared by the map preparation device 202 is displayed on the display device 30 of the task support terminal apparatus 1, the worker W taps the "decorate" button B1 within the display content control region Fc to cause the respective operation buttons to be displayed in the map editing region Fe.

(Procedure D12): Then, when the map preparation device 202 applies a decoration on the road in the prepared map, the worker W taps the "auxiliary line" button B4 within the map editing region Fe.

(Procedure D13): Then, the worker W successively taps two points on a straight line which is drawn as a road within a plant in the map display region Fm. The user interface 40 which accepted this operation outputs information (below-called a "drawing position information") on the respective positions with the position which is first tapped as a starting point and the position which is next tapped as an ending point to the map preparation device 202. In this way, the map preparation device 202 generates a map screen on which is drawn an auxiliary line (straight line) which connects two points tapped and outputs the generated map screen to the display 30 to cause the output result to be displayed on the display 30.

(Procedure D14): Moreover, the map preparation device 202 causes the information (the drawing position information) which shows the position of the auxiliary line drawn as a supplementary information for generating a map screen to be stored in the data storage device 60. In this way, even when using the task support terminal apparatus 1 at a different opportunity, when a region including the position of the auxiliary line drawn is caused to be displayed on the display 30, a map in which the auxiliary line is drawn as a decoration is displayed in the map display region Fm. The supplementary information includes information on the coordinates within the map display region Fm which shows the position of the auxiliary line drawn, for example.

Thereafter, by the worker W repeating the procedure D 13, the map preparation device 202 repeats drawing of the auxiliary line in the procedure D 13 and storage of the supplementary information in the procedure D 14. As shown in FIG. 5, this causes a map in which are shown roads within a plant by multiple auxiliary lines (auxiliary lines L1-L12) to be displayed in the map display region Fm.

The auxiliary line which is drawn as a road within a plant may be drawn not only as a collection of straight lines which connect two points drawn by tapping two points, but by drawing as a collection of straight lines which successively connect the respective points by tapping multiple points. Moreover, the width of the road with the drawn straight line as the center may be selected to draw the road within the plant.

(Procedure D12-2): Moreover, when a decoration on a warning location is applied in the map prepared by the map preparation device 202, the worker W taps the "warning area" button B5 within the map editing region Fe, for example.

(Procedure D13-2): Thereafter, the worker W drags a range to be drawn as the warning location within the plant in the map display region Fm from the position of the starting point to the position of the ending point. The user interface 40 which accepted this operation outputs the drawn position information showing the position of the starting point and the position of the ending point between which the worker W dragged. In this way, the map preparation device 202 generates a map screen in which is drawn a display (for example, a stripe pattern of yellow and black) which shows a warning location within a range of a rectangle shown in the drawn position information and outputs the generated map screen to the display 30 to cause the generated map screen to be displayed in the display 30.

(Procedure D14-2): Moreover, the map preparation device 202 stores the information (the drawn position information) showing the position of the warning location drawn in the data storage device 60 as the supplementary information when the map screen is generated. In this way, even when the task support terminal apparatus 1 is used in a different opportunity, causing a region including the position of the drawn warning location causes a map in which the warning location is drawn as the decoration to be displayed in the map display region Fm. FIG. 5 shows a case in which a map indicating a warning location N1 in a specific region of a road indicated with an auxiliary line L5 and an auxiliary line L7 in the plant is displayed in the map display region Fm. The supplementary information includes information on the coordinates within the map display region Fm which shows the location and the range of the warning location drawn, for example.

When there are multiple warning locations, the worker W repeats the procedure D 13-2. In this way, the map preparation device 202 repeats drawing of the warning location in the procedure D13-2 and storage of the supplementary information in the procedure D14-2 and a map which indicates multiple warning locations are displayed in the map display region Fm.

In this way, in the task support terminal apparatus 1, decoration is applied to the map displayed in the map display region Fm to make it easier to visually view the map by the map preparation device 202. In other words, a different worker also may prepare a map which makes it easier to grasp the position relationship of the respective facilities indicated in the map.

The worker W may also manually adjust the position of the checkpoint C and the decoration, such as slightly moving the position of the checkpoint C, for example, in alignment with the decoration applied to the map. In this case, by tapping the checkpoint C and the decoration to be moved after tapping the "move" button B3 within the map editing region Fe, the worker W selects, drags, and moves the decoration and the checkpoint C. Then, the map preparation device 202 updates the supplementary information stored in the data storage device 60 to information (information on the coordinates after moving the decoration, checkpoint C, for example) on the position of the checkpoint C and the decoration adjusted manually. In this way, even when multiple of the checkpoints C exist in the vicinity of one another, a map may be prepared which makes it possible to recognize the respective checkpoints C separately. When the checkpoint C is moved manually, the position information acquired from the position information acquirer 10 that is collated to this checkpoint C is not updated (changed). In other words, when the checkpoint C is moved manually, only the position information (for example, information on the coordinates within the map display region Fm) used for displaying the map is updated. In this way, as the actual position of the checkpoint C, accurate the position information which is obtained from the position information acquirer 10 as the actual position of the checkpoint C is maintained.

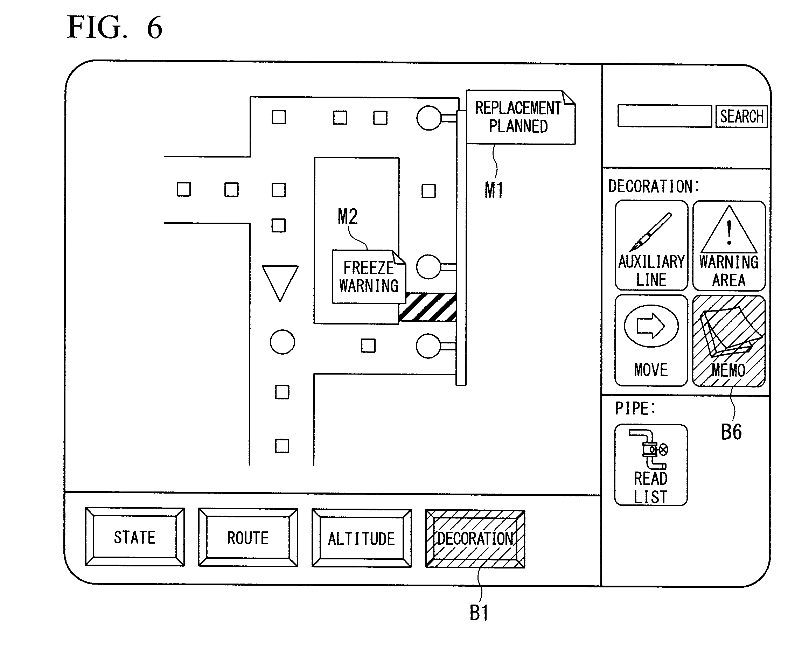

Next, an operation for a case in which decoration on what is other than a display of a map in the task support terminal apparatus 1 is applied to a map is described. With respect to the decoration which may be applied to the map to be displayed in the map display region Fm in the task support terminal apparatus 1, various decorations other than a decoration on a display of a map may be applied. For example, information which supplements a task carried out at the respective checkpoints C displayed in the map display region Fm and information such as warning matters when heading for the respective facilities may also be displayed as the decoration. FIG. 6 is a diagram illustrating a further one example in which the prepared map is decorated in the task support terminal apparatus 1 according to the present embodiment. FIG. 6 illustrates one example of a map which is prepared in the map preparation device 202 and in which decoration on the warning location and the road in the plant and the pipe X is applied, with an additional information on each of the checkpoint C1 and the warning location N 1 being applied as a decoration. According to the procedure as described below, the worker W applies the decoration of the additional information to the map displayed in the map display region Fm.

(Procedure D21): With the map screen being displayed on the display 30 of the task support terminal apparatus 1, the worker W taps a "decoration" button B1 within a display content control region Fc to cause the respective operation buttons to be displayed in the map editing region Fe. Then, the worker W taps a "memo" button B6 in the map editing region Fe to instruct the memo to be added.

(Procedure D22): Then, the worker W taps an arbitrary position within the map display region Fm to designate the position in which a memo is to be added. The user interface 40, upon accepting this operation, outputs information (below called "the memo position information") on the position at which addition of the memo is designated to the map preparation device 202. In this way, the map preparation device 202 generates a map screen which draws a display showing a map at a tapped position and outputs the generated map screen to the display 30 to cause the output result to be displayed on the display 30. Then, for inputting a memo, the memo preparation device 202 superimposes a keypad, a handwritten input pad, for example, onto the map screen to cause the superimposed result to be displayed in the display 30.

(Procedure D23): Then, the worker W uses the keypad and the handwritten input pad, which are imposed onto the map screen to input the content of the memo added. The user interface 40, upon accepting this operation, outputs information on the input content of the memo to the map preparation device 202. In this way, the map preparation device 202 generates a map screen which reflects the input content of the memo within a drawing of a memo displayed at the tapped position and outputs the generated map screen to the display 30 to cause the output result to be displayed on the display 30.

(Procedure D24): Moreover, the map preparation device 202 stores information (a memo position information) showing the position of the memo drawn and information showing the content of the memo in the data storage device 60 as the supplementary information for generating a map screen. In this way, even when the task support terminal apparatus 1 is used in a different opportunity, when a region which includes a location at which a memo is added is caused to be displayed on the display 30, a map in which is drawn the additional memo as a decoration is displayed in the map display region Fm. For example, the supplementary information includes information, etc., on the coordinate in the map display region Fm which shows the position of the memo.

When there are multiple memos to be added, the worker W repeats the procedure D22 and the procedure D23. In this way, the map preparation device 202 repeats a process of adding a memo in the procedures D22-D24 and displays a map in which is added a memo at multiple locations in the map display region Fm. FIG. 6 shows a case where a map in which a memo M1 of the content being "replacement planned" is added at the location corresponding to the checkpoint C1 and a memo M2 of the content being "freeze warning" is added to the position corresponding to the warning location N1 is displayed in the map display region Fm.

In this way, in the task support terminal apparatus 1, a memo may be added to a map displayed in the map display region Fm to even for the other worker to grasp warning matters, etc., for visiting the respective facilities only by looking at a map, etc.

The position of the memo added may also be moved manually in accordance with the same procedure as that when moving the position of the checkpoint C is moved or when decoration is applied to the map of the pipe X, etc.Then, the map preparation device 202 similarly updates the supplementary information stored in the data storage device 60 to information on the position of the memo which is moved manually (for example, information on the coordinate after moving the memo).

As described above, according to the respective procedures, the task support terminal apparatus 1 may prepare the map which accurately reflects the position relationship of the respective facilities provided in the plant. More specifically, the worker W carrying the task support terminal apparatus 1 to carry out the task on the respective facilities provided in the plant makes it possible to prepare a map in which the position information on the respective positions in the route along which the worker W moved and the position information on the location of the facility in which the worker W carried out the task are automatically divided into the passing point P and the checkpoint C. Then, the task support terminal apparatus I may provide an easier-to-view map in which decoration is applied onto the prepared map in response to the operation by the worker W.

In one example of the above-described operation in which decoration is applied to the map, a case has been described of applying a decoration to a map by an operation of a tablet terminal which is the task support terminal apparatus 1. For example, however, when data of the map is stored in the server apparatus provided in the office, decoration onto the map may also be carried out by using a personal computer used by the worker W.

A map prepared in this way may be checked for a worker who is different from a skilled worker W to efficiently visit the facility to be the work site and easily grasp the content of the task on the facility to carry out the task.

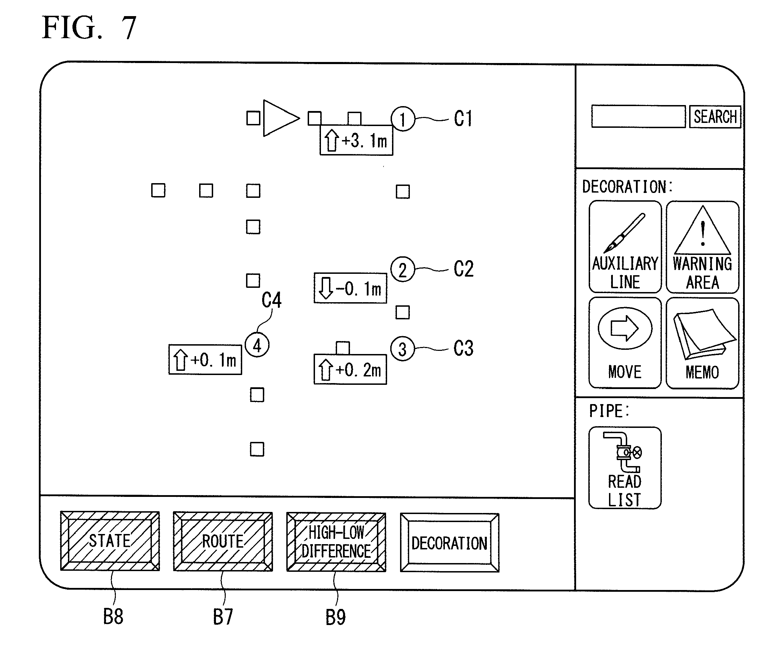

Next, in the task support terminal apparatus 1, one example is described of a map screen to be displayed on the display 30 for supporting the task in the respective facilities according to the present embodiment. FIG. 7 is a diagram illustrating one example of displaying information for supporting a task on the prepared map in the task support terminal apparatus 1 according to the present embodiment.

The one example of the map screen shown in FIG. 7 shows a case in which a sequence number (route) for visiting the respective facilities is shown with numbers within the checkpoint C that is included in the map prepared by the map preparation device 202. The sequence number for visiting the respective facilities may be displayed by superposing on a map by the worker to tap the "route" button B7 within the display content control region Fc. FIG. 7 shows that the worker visits in the sequence of the checkpoint C1 (facility E1), the checkpoint C2 (facility E2), the checkpoint C3 (facility E3), and the checkpoint C4 (facility E4).

In this way, showing a sequence number (a route) for visiting the respective facilities makes it possible for a worker (below called "worker W2") which is different from the skilled worker W to check the sequence number of a task which is previously carried out by the skilled worker W, for example, making it possible for the worker W2 to support moving to the respective facilities when carrying out the same task as the worker W. The method which shows the sequence number (route) for visiting the respective facilities is not limited to a method shown with the number within the above-described checkpoint C, so that, for example, it may be a method of changing the symbol of the respective points P included in the map to a symbol of an arrow and a triangle that indicate the route.

Moreover, in one example of the map screen illustrated in FIG. 7 is shown a case in which results (states) of previously carried out task is shown by changing the shade or color of the checkpoint C. The results (states) of the previously carried out task in the respective facilities may be caused to be displayed by superposing them onto a map by the worker W2 tapping the "state" button B8 within the display content control region Fc. Then, the map preparation device 202 causes task results in the respective facilities to be displayed based on information of task results included in the task information stored in the data storage device 60. For example, changing the color of the checkpoint C by changing to "green" when there is no problem with the task results (the task results are OK), changing to "red" when there was a problem with the task results (the task results are NG), changing to "yellow" when the state cannot be determined from the task results, changing to "white" when the task results are not included in the task information., i.e., when the task is not carried out.

In this way, showing the results (state) of the task previously carried out in the respective facilities in advance makes it possible to support checking of task results of the whole plant and checking of the facilities for which the task is not carried out by the worker W2. A method which shows the results (state) of the task previously carried out in the respective facilities is not limited to a method of changing the shade and the color of the above-described checkpoint C, so that, for example, it may be a method which shows the shape of the symbol of the checkpoint C (a circle symbol in the above-described explanation), for example, in a symbol or letter of a different shape such as a double circle, an ex, a triangle, etc.

Moreover, one example of the map screen shown in FIG. 7 shows a case in which information on the altitude (the high-low difference) of the work site in which the task is carried out in the respective facilities is shown in the vicinity of the respective checkpoints C. Information on the altitude (the high-low difference) of the work site which carries out the task in the respective facilities is caused to be displayed by superposing onto the map by tapping a "high-low difference" button B9 within the display content control region Fc by the worker W2. Then, the map preparation device 202 causes the altitude of the work site at which the task is carried out in the respective facilities to be displayed based on information on the altitude that is included in the task information stored in the data storage device 60, or information on the altitude included in the position information obtained from the position information acquirer 10 when the task content processor 203 records the task results in the procedure M4 of preparing a map. FIG. 7 shows that the task at the checkpoint C1 (the facility E1) is at the position of "+3.1m"; the task at the checkpoint C2 (the facility E2) is at the position of "-0.1m"; the task at the checkpoint C3 (the facility E3) is at the position of "+0.2m"; and the task at the checkpoint C4 (the facility E4) is at the position of "+0.1m". FIG. 7 shows an arrow which shows the direction in addition to information on the altitude to make it easier to visually grasp whether the position at which the task is carried out is above or below.

In this way, showing information on the altitude (high-low difference) of the work site at which the task is carried out in the respective facilities makes it possible to support grasping of the position in the altitude direction of the work site by the worker W2 within the task information of the respective facilities that is stored in the data storage device 60.While FIG. 7 shows that the altitude (the high-low difference) of the work site is an altitude with the altitude of a ground face on which the respective facilities are arranged as the reference, it is not limited thereto, so that, for example, the altitude of the work site with the altitude of the current position as the reference, or, in other words, the relative altitude of the current position and the altitude of the work site may be shown.

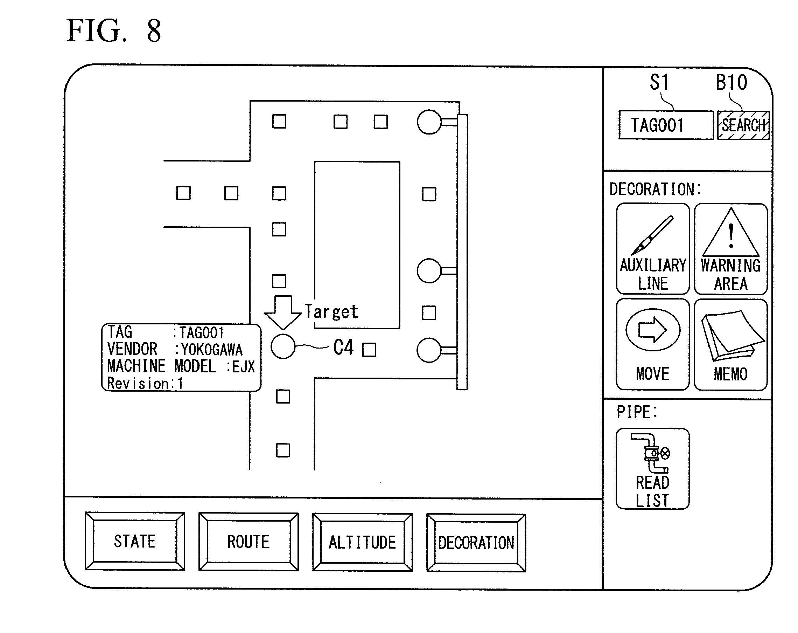

Next, one example is described of a map screen for use in a search function in the task support terminal apparatus 1. FIG. 8 is a diagram illustrating one example of displaying search results on the prepared map in the task support terminal apparatus 1 according to the present embodiment. One example of the map screen shown in FIG. 8 shows a case in which results of searching the facility to which the worker W2 visits is superimposed onto a map prepared by the map preparation device 202 to show the superimposed result thereon.

When the position within the plant in which a facility the worker W2 visits is arranged is searched, first the worker W2 taps the search keyword input region S1 within the search function region Fs. The user interface 40, upon accepting this operation, outputs information showing that input of the search keyword has been instructed to the map preparation device 202. In this way, the map preparation device 202 causes a keypad or a handwritten input pad to be superimposed onto the map screen, for example, as a way for inputting the search keyword. Using the keypad or handwritten input pad superimposed on the map screen, the worker W2 inputs an identification information such as a tag, etc., allocated to the facility which searches the position arranged using the keypad or handwritten input pad superimposed on the map screen, and then the "search" button B10 is tapped. The user interface 40 which accepted this operation outputs the information which shows the content of the search keyword input and information which shows that a search has been executed to the map preparation device 202.

In this way, from task information sets of the respective facilities stored in the data storage device 60, the map preparation device 202 searches the task information in which is included the identification information input as a search keyword from task information sets of the respective facilities stored in the data storage device 60 to specify the searched facilities. Then, the map preparation device 202 acquires the position information included in the task information of the specified facility and causes a symbol which indicates a checkpoint C to which the acquired position information is collated to be superimposed onto the map to cause the superimposed result to be displayed thereon. Then, the map preparation device 202 may cause information on the facility included in the task information of the specified facility to be displayed in the vicinity of the checkpoint C in addition to the symbol shown in the checkpoint C.

FIG. 8 shows that an identification information called "TAG001" as a search keyword is input and the facility to which this identification information is specified as a facility E4 of the checkpoint C4 to make it easier to visually grasp the position of the checkpoint C4 and the characters of "Target". Moreover, in FIG. 8, a case is shown in which one example of information on each of the facilities E4 of the "tag", "vendor", "machine model", "Revision" is superimposed in the vicinity of the checkpoint C4 to cause the superimposed results to be displayed therein. Then, out of information on the facility E4 displayed, information which applies to the search keyword (in this example, "TAG001" being information of "tag") may be emphasized to cause the emphasized result to be displayed therein.

In this way, in the task support terminal apparatus 1, the search keyword may be input into the search keyword input region S1 within the search function region Fs to conduct the search to make it easier for the worker W2 to visually grasp the position within the plant at which the facility to be searched is arranged.

As described above, the task support terminal apparatus 1 may superimpose information for supporting the task at the respective facilities onto a map which is prepared by the map preparation device 202, or, in other words, a map which is displayed for reference when visiting the respective facilities. In this way, the worker W2 may efficiently visit the facilities to be aimed at while checking a map onto which is superimposed information for supporting the task at the respective facilities.

Next, an operation of the task support terminal apparatus 1 is described in accordance with the procedure in which the worker W2 uses the task support terminal apparatus 1 to carry out the task on the respective facilities within the plant. In the descriptions below, explanations will be given on the assumption that the content of the task carried out in the respective facilities and the data of the map prepared is already stored in the data storage device 60 included in the task support terminal apparatus 1.

(Procedure U1): The worker W2 activates the task support terminal apparatus 1 and operates the user interface 40 to set the time interval during which the position information is acquired by the position information acquirer 10. The user interface 40 which accepted this operation outputs information on the set time interval to the data processor 20. Then, the data processor 20 sets information on the time interval that is input from the user interface 40 to the timer 201 and starts acquisition of the position information by the position information acquirer 10.

(Procedure U2): The worker W2 operates the user interface 40 to instruct displaying onto the display 30 of the map screen prepared by the map preparation device 202. The user interface device 40 which accepted this operation outputs information showing that displaying of the map screen has been instructed to the map preparation device 202. In this way, the map preparation device 202 reads map data and a supplementary information stored in the data storage device 60 from the data storage device 60 to generate the read map screen and output the generated map screen to the display 30 to cause the generated map screen to be displayed on the display 30. Here, for example, the map screen as shown in FIG. 6 is displayed on the display 30.

(Procedure U3): The worker W2 operates the user interface 40 to cause information for supporting the task at the respective facilities to be displayed on the map displayed on the display 30. For example, the worker W2 taps an "altitude" button B9, a "route" button B7, and a "state" button B8 within the display content control region Fc. In this way, the map preparation device 202, for example, generates the map screen in which various support information is included as shown in FIG. 7 to cause the generated result to be displayed onto the display 30, for example.

(Procedure U4): The worker W2 carries the task support terminal apparatus 1 on which the map screen is displayed to visit the respective facilities. Then, the timer device 201 requests acquisition of the position information at the set time interval to the position information acquirer 10. Then, the position information acquirer 10 successively outputs the position information acquired in response to a request from the timer device 201 to the map preparation device 202. In this way, the map preparation device 202 successively generates the map screen onto which is superimposed the current position point PP which shows the current position of the worker W2 and successively updates a map displayed on the display 30 to show how the worker W2 is moved.

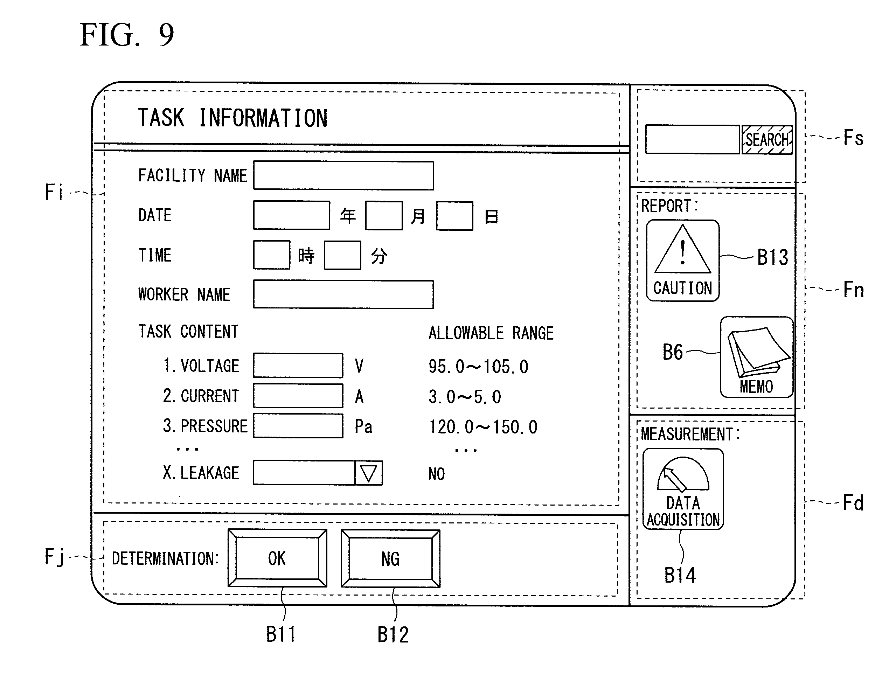

(Procedure U5): Upon arrival in the task site (for example, facility E1), the worker W2 operates the user interface 40 to instruct presentation of the task content to the task support terminal apparatus 1. More specifically, the worker W taps the checkpoint C of the current position. The user interface 40 which accepted this operation outputs information showing that presentation of the task content is instructed to the task content processor 203. In this way, the task content processor 203 reads the task information in which is included the content of the task on the facility collated to the checkpoint C of the current position from the data storage device 60 and generates the display screen (below called "a task information screen") as shown in FIG. 9, for example, for presenting the read task information (task content) to the worker W2 to output the generated result to the display 30. In this way, the display 30 displays (presents) the task content via a screen for information on a task on the facility of the checkpoint C in the current position that is requested by an operation of the user interface 40.

As an operation of a worker W2 for causing the task content to be displayed on the display 30, for example, the facility is searched with an identification information on a tag, etc., which is allocated to the facility of the current position as a keyword and the searched facility may be tapped to cause the content of the task on the facility of the checkpoint C of the current position to be displayed on the display 30.

(Procedure U6): The worker W2 carries out the task on the facility based on the task content presented, operates the user interface 40 to input the results of the task carried out into the work support terminal apparatus 1. The user interface 40, upon accepting this operation, outputs the input information on the task results to the task content processor 203. This causes the task content processor 203 to add the information on the task results that is input from the user interface 40 to the task information read from the data storage device 60 and to store the task information to which the information on the task results is added in the data storage device 60.

In the procedure U6, when the communications device 501 included in the task support terminal apparatus 1 conducts communications with a measurement device provided in the facility of the checkpoint C of the current position, the acquired measurement results may also be added to the task information as information on the task results as information on the task results to store the added result in the data storage device 60.

(Procedure U7): The worker W2 carries the task support terminal apparatus 1 to head for the facility which is the next work site. Then, in the same manner as the procedure U4, the timer device 201 requests acquisition of the position information at the set time interval to the position information acquirer 10, the position information acquirer 10 successively outputs the position information acquired in response to a request from the timer device 201 to the map preparation device 202, and the map preparation device 202 successively generates a map screen onto which is superimposed a current position point PP which shows the current position of the worker W2 to cause the display 30 to successively display a map which shows how the worker W2 moves.

Thereafter, the worker W2 repeats the procedures U5-U7 until the current series of tasks is completed.

(Procedure U8): Upon completion of the current series of tasks, the worker W2 operates the user interface 40 to report to the task support terminal apparatus 1 that all of the tasks have been completed. The user interface 40, which accepted this operation outputs information showing that the task has been completed to the data processor 20. This causes the data processor 20 to complete generation of the map screen by the map preparation device 202 and request for acquisition of the position information at the time interval set by the timer device 201.

With such procedures, the worker W2 may carry out the task which is the same as a series of tasks on the respective facilities that are carried out by the worker W while checking the map displayed in the task support terminal apparatus 1. Then, in the task support terminal apparatus 1, the work content processor 203 may add information on the results of the task to the respective facilities that is carried out by the worker W2 to store the added result in the data storage device 60. In this way, the task support terminal apparatus 1 may be used for even a different worker to efficiently visit the respective work site in a manner similar to the skilled worker W to carry out the task in the work site.

As described above, the task support terminal apparatus 1 causes information on the current task results to be added to the task information which is stored in the data storage device 60 to store the added result in the data storage device 60. In other words, in the task support terminal apparatus 1, rather than updating information on the task results that are included in the task information, information on the results of the respective tasks are accumulated. In this way, when carrying out the task in the respective facilities, the worker W2 may check information on the past task results, or, in other words, the history of the task results. This makes it possible for the worker W2 to refer to past methods of handling therewith, when a trouble occurs in the facility in which the current task is being carried out and to carry out the same handling which suits the current trouble.

When the worker W2 brings back the task support terminal apparatus 1 upon completion of the task in the respective facilities, for example, the task support terminal apparatus 1 may share data on the task information that is stored in the data storage device 60 with a different task support terminal apparatus 1 within the office via communications by the communications device 501. Moreover, the communications device 501, for example, may cause task information data to be stored in the server apparatus by means of communicating with a server apparatus which is provided in the office and the task information data to be shared with a different task support terminal apparatus 1 within an office via the server apparatus.

Next, a more specific example of a task information screen displayed in the display 30 of the task support terminal apparatus 1 is described. FIG. 9 is a diagram illustrating one example of displaying the task information in the task support terminal apparatus 1 according to the present embodiment. FIG. 9 shows one example of the task information screen generated by the task content processor 203. The task information screen includes a task information display region Fi, determination result input region Fj, a search function region Fs, a reporting function region Fn, and a measurement control region Fd.

The task information display region Fi is a region in which the task information is displayed and results of the task carried out by the worker is input. FIG. 9 shows one example of task information, in which measurement results of a measurement device provided in this facility is input to investigate operation conditions of the facility arranged within the plant. More specifically, the task information is shown in which a "facility name" of this facility, a "date" and "time" into which measurement results are input, a "worker name" for a worker who conducts measurement, or, in other words, who carries out a task, and, that a task is carried out of inputting task results (measurement results) on "voltage", "temperature", "pressure", and "leakage" is input as a task content. In one example of the task information display region Fi that is shown in FIG. 9, a format is provided in which task results (measurement results) are input into individual fields. More specifically, a numerical value of measurement results is input into each of the fields of the "voltage", "temperature", and "pressure" and a selection is made from a pull-down menu for the field of the "leakage". The worker who carries out the task based on this task information inputs information corresponding to the respective fields using input devices such as a keypad, manual input pad, etc., for example, that is displayed by tapping an input region of the respective fields.

For the field of "the facility name", a name of a facility included in read work information may be input in advance when the task content processor 203 generates a task information screen based on task information read from the data storage device 60. Moreover, input may be made in advance into the fields of "the date" and "the time" when the task content processor 203 acquires information on the date and the current time from a clock function included in the task support terminal apparatus 1 to generate a task information screen. Moreover, for the field of "the worker name", in a manner similar to setting of the time interval during which the position information is acquired that is carried out in the above-described procedure U1, for example, a worker name which is set by the worker before the worker visits the respective facilities using the task support terminal apparatus 1 may be input in advance into the field of "the worker name" when the task content processor 203 generates the task information screen.

The determination result input region Fj is a region into which a determination result on whether the facility in which the task is carried out is operating normally based on the respective task results (measurement results) which are input into the task information display region Fi. FIG. 9 shows a display of the determination result input region Fj of a format in which an "OK" button B11 is tapped when the facility is operating normally and an "NG" button B12 is tapped when abnormality is observed in the task results (measurement results).

The search function region Fs is a region into which a search keyword is input to search the input keyword. This search function region Fs is used for a facility search in which the task information is caused to be displayed in the task information display region Fi when the worker W2 arrives at the facility, searching information on the past task results, etc. The search function region Fs is the same as the search function region Fs in the map screen, so that detailed explanations are omitted.

The report function region Fn is a region which displays an input button for inputting an additional information in the facility in which the task is carried out. FIG. 9 shows a "caution needed" button B13 for indicating that the operating condition of the facility in which the task is carried out needs to be checked with caution and a "memo" button B6 for inputting a memo on the facility on which the task is carried out.

The measurement control region Fd is a region which displays an instruction button for instructing acquisition of data from a measurement device provided in the facility in which the task is carried out. FIG. 9 shows a case in which a "data acquisition" button B14 is displayed for instructing the communications device 501 included in the task support terminal apparatus 1 to conduct communications with the measurement device provided in the facility to instruct acquisition of measurement results. The user interface 40, upon accepting an operation of tapping the "data acquisition" button B 14, causes information showing that acquisition of the measurement results are instructed to be output to the task content processor 203 and the data acquirer 50. In this way, the data acquirer 50 acquires data on measurement results of the measurement device by the communications device 501 and stores data on the acquired measurement results in the data storage device 60. Moreover, the task content processor 203 reads data on the measurement results stored in the data storage device 60 and reflects information on the read measurement results into the corresponding task field within the task information display field Ti. In this way, the worker may check measurement results of the measurement device and determine as to whether the facility which carried out the task is normally operating.

In this way, with the task support terminal apparatus 1, the task information may be displayed after visiting and arriving at the facility to be the work site while checking the map prepared to easily grasp the task carried out on the facility visited to carry out the task.

As described above, according to an embodiment of the present invention, the position information acquirer acquires the position information for moving within a plant while the work carries the task support terminal apparatus for each time interval set. Then, according to an embodiment of the present invention, the map preparation device prepares a map within a plant that shows a route along which the task support terminal apparatus moves based on the position information acquired by the position information acquirer. Moreover, according to an embodiment of the present invention, a map is prepared with the position information on the position at which the task is carried out when the task is carried out on the facility provided within the plant using the task support terminal apparatus as a position information (a passing point in an embodiment) which is different from a position information (a checkpoint in an embodiment) which shows the position of a route of movement. In this way, according to an embodiment for carrying out the present invention, the position relationship of positions at which the task is required within the plant may be accurately reflected to automatically prepare a map shown to distinguish the map from the route for visiting the position to record the prepared result. Moreover, according to an embodiment for carrying out the present invention, the worker may successively show information on the current position on the map when the worker moves while the worker carries the task support terminal apparatus. Furthermore, according to an embodiment for carrying out the present invention, information on the altitude of the position at which the task is carried out in the respective facilities may be shown on the map. According to an embodiment for carrying out the present invention, this makes it possible for the worker to efficiently visit the facility to be aimed at that is shown on a map by the worker carrying the task support terminal apparatus to check the map. In other words, using the task support terminal apparatus causes heading to a wrong facility or delaying in arrival as in the related art to be eliminated. Moreover, binding the time of the worker who guides as in the related art is caused to be eliminated.

Furthermore, in an embodiment for carrying out the invention, a decoration may be applied to a map, such as the positional relationship and the connection of the respective facilities shown in the map prepared, warning matters for visiting the respective facilities, etc. Moreover, according to an embodiment for carrying out the invention, the position of the respective facilities shown in the prepared map may be moved without changing the actual position of the facility. In this way, according to the embodiment for carrying out the invention, the worker may prepare a map which is made easier to view and to grasp visually.

Moreover, according to an embodiment for carrying out the invention, the task content processor causes to display the content of the task which is carried out in the facility of the current position. Then, according to the embodiment for carrying out the invention, the task content processor collates the result of the task performed based on the displayed content of the task and the position information on the current position acquired by the position information acquirer. In this way, in the embodiment for carrying out the invention, the position of a location in which the work is required in the plant and the content and the result of the task carried out at the position may be collated to record the collated results. In this way, according to the embodiment for carrying out the invention, even when the task content differs for the respective facilities at which the task is carried out, the worker may easily grasp the task on that facility to carry out the task. Moreover, according to the embodiment for carrying out the invention, the task content processor adds results of the task at the respective facilities to store the added results. In this way, according to the embodiment for carrying out the invention, the worker may carry out an appropriate handling task based on the past task results. In other words, when the worker carries out the task of handling facility troubles, the task support terminal apparatus may be used to contribute to shortening of the time until the facility recovers.

According to an embodiment for carrying out the invention, an example is shown of a pipe which connects the respective facilities, a road and a warning location within a plant, and one example of a memo. However, a decoration which is applied to a map is not limited to a decoration shown in an embodiment for carrying out the present invention. For example, in order to visually grasp what facilities are the respective facilities arranged in the plant, a decoration in which is arranged a shape (for example, an icon) which shows the respective facilities on a map may also be carried out.

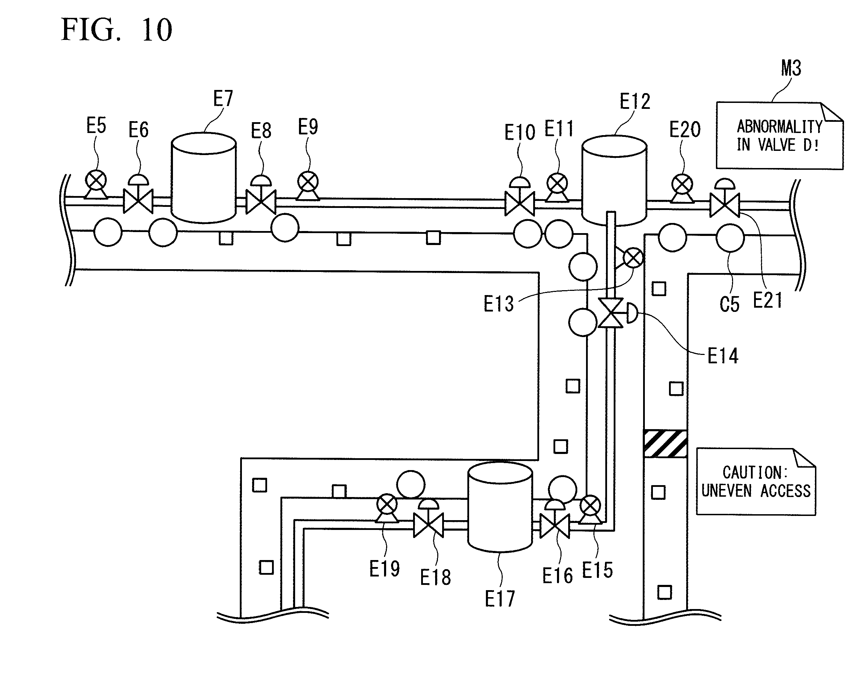

Here, an example of a case in which a further decoration is applied to the map is described in the task support terminal apparatus 1. FIG. 10 is a diagram which shows one example in which a decoration is applied onto the prepared map in the task support terminal apparatus according to the present embodiment. FIG. 10 shows one example of a map prepared by the task support terminal apparatus 1 in a plant provided by facilities E5-E21 facing a road. In FIG. 10, only a map which is displayed within the map display region Fm is shown. In one example of the map shown in FIG. 10, the respective facilities E5, E9, E11, E13, E15, E19, and E20 are apparatuses and the facilities are shown with an icon with a shape which shows the apparatus. Moreover, in an example of the map shown in FIG. 10, each of the facilities E6, E8, E10, E 14, E 16, E 18, and E21 is a valve, and the respective facilities are shown with an icon of the shape showing the valve. Moreover, one example of a map shown in FIG. 10 shows that each of the facilities E7, E12, and E 17 is a tank and the respective facilities are shown with an icon of the shape showing the tank. In this way, a map prepared with an icon of the shape showing what facilities are the respective facilities may be decorated for the worker which visits the respective facilities to be a work site while checking the map to prepare a map which is easy to grasp visually.

FIG. 10 shows a case in which a memo M3 of the content of "abnormality in a valve D" is added. In this case, abnormality is found in the valve D, which is a facility E21 which corresponds to the checkpoint C5. As described above, if the worker which performed the task in the respective facilities while moving the plant finds an error of the facilities (this time, a facility E21=valve D), information on the past task results may be checked to handle in the same manner as the past handling method. However, if the abnormality (trouble) is not resolved while carrying out the past handling methods, the memo of the content which shows the trouble such as a memo M3 shown in FIG. 10 may be added on the map to cause that the abnormality is occurring at the facility is highlighted. Here, a color of the memo may be changed and a color of the icon of the facility may be changed to further emphasize the facility at which the abnormality is occurring. If the facility at which the trouble is occurring cannot be specified, for example, the position at which the abnormality is found, or, in other words, the color or the design in the periphery of the current position may also be emphasized.

Then, for example, the worker who added the memo may provide a report to a different worker by bringing back the task support terminal apparatus 1 to an office and gain the cooperation. For example, the worker who may handle this abnormality may carry the task support terminal apparatus 1 in which the memo is added on the map to visit the facility E21 and handle appropriately. Then, the worker which carried out the task for trouble handling on the facility E21 may, for example, delete the memo M3 or restore the color of the icon of the facility. Moreover, the worker who carried the task on trouble handling on the facility E21 may also state the content of the trouble, or the content of the task corresponding to the trouble, for example.

In this way, in the task support terminal apparatus 1, various decorations may be applied on a map to support the task carried out by the worker while making it easy to visually recognize various information sets to support the task performed by the worker. The display of the map prepared in the task support terminal apparatus 1 is not limited to a two-dimensional display as described above, but also a three-dimensional display which includes information on the altitude.

Moreover, according to an embodiment for carrying out the present invention, as a method of inputting the task results, a case is described of characters and measurement results in the respective fields within the task information screen as shown in FIG. 9. However, a method of inputting the task result is not limited to a decoration which is shown in the embodiment for carrying out the present invention. For example, a voice input function or voice popularity function which is provided in a tablet terminal, which is the task support terminal apparatus 1, may be used and the worker may voice "OK" or "NG", etc., to input the determination results. Moreover, for example, in communication with a measurement device which is provided in the facility in the communications device 501 included in the task content terminal apparatus 1, the result in response to that operation may input as the operation result when it is determined that an operation is carried out on the facility and the measuring instrument by the worker.

For example, programs for implementing a process by the respective elements within a data processor 20 which configures the task support terminal apparatus shown in FIG. 1 are recorded on a computer readable recording medium to cause programs recorded in the recording medium to be read into and executed by a computer system to carry out the above-described various processes in accordance with the task support terminal apparatus 1 according to the present embodiment. The "computer system" here may include the hardware such as an OS, peripheral equipment, etc. Moreover, the "computer system" may also include the homepage provision environment (or a display environment) even when a WWW system is used. Moreover, "the computer-readable recording medium" refers to a recording apparatus, such as a hard disk, etc., which is embedded in a computer system, a portable medium, such as a CD-ROM, a non-volatile memory which is writable such as a ROM, a flash memory, etc., a magneto-optical disk, a flexible disk.

Moreover, like a volatile memory (for example, DRAM (Dynamic Random Access Memory)) within a computer system to be a server or a client when programs are transmitted via a network such as the Internet, etc., a communications circuit such as a telephone circuit, etc., "the computer readable recording medium" is to also to include what holds programs for a certain period. Moreover, the above-described programs may transmit this program from a computer system having this program stored in a storage apparatus, etc., to a different computer system via a transmission medium or by a transmission wave within a transmission medium to a different computer system. Here, "a transmission medium" which transmits programs refers to a medium which includes a function of transmitting information such as a network (communications network) such as the Internet, a communications circuit (communications line) such as a telephone circuit, etc. Moreover, the above-described program may be for implementing a part of the above-described functions. Furthermore, the above-described function may be what is implemented in a combination of the above-described function with programs already recorded in the computer system (a differential program).

While preferred embodiments of the invention have been described and illustrated above, it should be understood that these are exemplary of the invention and are not to be considered as limiting. Additions, omissions, substitutions, and other modifications can be made without departing from the scope of the present invention. Accordingly, the invention is not to be considered as being limited by the foregoing description, and is only limited by the scope of the appended claims.

## Claims

1. A task support terminal apparatus which supports a task carried out on a facility of a plant, comprising:
a position information acquirer which is configured to acquire a first position information at a time interval set in advance and a second position information on a position at which results of the task are acquired;
a task content processor which is configured to generate a task information in which results of the task carried out on the facility are collated to the second position information acquired by the position information acquirer; and
a map preparation device which is configured to prepare a map in which the first position information acquired in the position information acquirer is shown with a first symbol and the second position information collated with the task information is shown with one or a plurality of second symbols which are different from the first symbol.

2. The task support terminal apparatus as claimed in claim 1,
wherein the map preparation device applies a decoration which visually shows a connection of the second symbols shown in the map prepared based on a facility-related list in which information on connecting together the facilities that is input is compiled for each of the facilities.

3. The task support terminal apparatus as claimed in claim 1 or 2,
wherein the map preparation device applies a decoration which visually shows the condition within the plant shown in the map prepared in accordance with an operation input.

4. The task support terminal apparatus as claimed in any one of claims 1 to 3, wherein the map preparation device applies a decoration which visually shows the input information content in the position within the map specified by an operation input.

5. The task support terminal apparatus as claimed in any one of claims 1 to 4, wherein the map preparation device does not change the second position information corresponding to the second symbol and changes only the coordinate information on the map when indicating the second symbol when moving the second symbol indicated in the map prepared in response to an operation input.

6. The task support terminal apparatus as claimed in any one of claims 1 to 5, wherein the task content processor, in response to an operation input, causes the content of the task carried out on the facility that is stored in advance to be displayed and generates the task information in which are collated the content of the task, the results of the task, and the second position information.

7. The task support terminal apparatus as claimed in claim 6,
wherein the task content processor generates task information in which the results of the task are added to results of the task that are already included in the task information.

8. A task support method in a task support terminal apparatus which supports a task carried out on a facility of a plant, comprising the steps of:
acquiring a first position information at a time interval set in advance and a second position information on a position at which results of the task is acquired;
generating a task information in which results of the task carried out on the facility are collated to the second position information acquired in the acquiring; and
preparing a map in which the first position information acquired in the acquiring is shown with a first symbol and the second position information collated with the task information is shown with one or a plurality of second symbols which are different from the first symbol.

9. A non-transitory computer readable medium having recorded thereon a program which causes a computer to execute a task support method in a task support terminal apparatus which supports a task carried out on a facility of a plant, comprising the steps of:
acquiring a first position information at a time interval set in advance and a second position information at a position at which results of the task is acquired;
generating a task information in which results of the task carried out on the facility are collated to the second position information acquired in the acquiring; and
preparing a map in which the first position information acquired in the acquiring is shown with a first symbol and the second position information collated with the task information is shown with one or a plurality of second symbols which are different from the first symbol.
